(19) **Europäisches Patentamt / European Patent Office / Office européen des brevets**

(11) **EP 3 729 638 B1**

(12) **FASCICULE DE BREVET EUROPEEN**

(45) Date de publication et mention de la délivrance du brevet:
**30.04.2025 Bulletin 2025/18**

(21) Numéro de dépôt: **18819126.6**

(22) Date de dépôt: **18.12.2018**

(51) Classification Internationale des Brevets (IPC):
*H02P 29/64* (2016.01)    *H02P 29/02* (2016.01)
*G01K 7/16* (2006.01)    *H02H 7/06* (2006.01)
*H02H 7/08* (2006.01)    *H02P 29/60* (2016.01)

(52) Classification Coopérative des Brevets (CPC):
**H02P 29/02; G01K 7/16; H02H 7/06; H02H 7/08; H02P 29/60; H02P 29/64;** G01K 2205/00

(86) Numéro de dépôt international:
**PCT/EP2018/085465**

(87) Numéro de publication internationale:
**WO 2019/121662 (27.06.2019 Gazette 2019/26)**

(54) **PROCÉDÉ D'ESTIMATION DE LA TEMPÉRATURE INTERNE D'UNE MACHINE TOURNANTE, UNITÉ ÉLECTRONIQUE DE CONTRÔLE, ACTIONNEUR ET DISPOSITIF DOMOTIQUE ASSOCIÉS**

VERFAHREN ZUR SCHÄTZUNG DER INNENTEMPERATUR EINER DREHMASCHINE, ZUGEHÖRIGE ELEKTRONISCH STEUEREINHEIT, AKTUATOR UND HEIMAUTOMATISIERUNGSVORRICHTUNG

METHOD FOR ESTIMATING THE INTERNAL TEMPERATURE OF AN INTERNAL MACHINE, ELECTRONIC CONTROL UNIT, ACTUATOR AND DOMOTIC APPARATUS ASSOCIATED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2017 FR 1771385**

(43) Date de publication de la demande:
**28.10.2020 Bulletin 2020/44**

(73) Titulaire: **Somfy Activites SA**
**74300 Cluses (FR)**

(72) Inventeurs:
• **BRUNO, Serge**
  **74460 Marnaz (FR)**

• **TOLLANCE, Thierry**
  **74930 Pers-Jussy (FR)**

(74) Mandataire: **Clabaut, Muriel et al**
**Somfy Activites SA**
**Propriété Intellectuelle**
**400 Avenue de la république**
**BP 240**
**74307 Cluses Cedex (FR)**

(56) Documents cités:
EP-A1- 1 677 411     EP-A1- 2 743 713
US-A1- 2010 156 338

**Description**

La présente invention concerne le domaine des machines tournantes électriques comme une génératrice d'énergie électrique ou un moteur électrique. La présente invention concerne plus particulièrement un procédé d'estimation de la température interne d'une machine électrique tournante polyphasée. L'invention concerne également un actionneur électromécanique et un dispositif domotique associés.

La présente invention peut, par exemple, trouver une application dans le domaine des installations domotiques notamment dans le domaine des dispositifs d'occultation, afin d'estimer la température interne d'un moteur. L'estimation de la température interne du moteur peut, par exemple, être un préalable au démarrage ou non du moteur électrique d'un équipement domotique.

Un dispositif d'occultation comprend un dispositif d'entraînement motorisé mettant en mouvement un écran, entre au moins une première position et au moins une deuxième position. Le dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite « écran ».

Certains actionneurs destinés à être installés dans les bâtiments et destinés à la manœuvre d'écrans comprennent un moteur à collecteur ou sans balais (également nommé *« brushless »* selon la terminologie anglo-saxonne). Le moteur placé dans l'actionneur est soumis à un échauffement quasi adiabatique, du fait du carter cylindrique de l'actionneur (de plus en plus souvent en matière plastique) ou du fait du tube d'enroulement entraîné en rotation par l'actionneur et entourant ce dernier : ces différentes parois, auxquelles s'ajoutent le produit mobile enroulé et le caisson logeant l'ensemble, limitent les échanges avec l'air ambiant.

Cet échauffement pouvant prendre de très fortes valeurs, il est important de pouvoir mesurer la température du moteur afin de garantir la sécurité contre les risques d'incendie. Cette connaissance permet également d'optimiser les conditions d'alimentation du moteur, d'agir sur les durées de commande et/ou sur la puissance d'alimentation.

EP 1 677 411 A1, US 2010/156338 A1 et EP 2 743 713 A1 divulguent une technique d'estimation de la température des enroulements du moteur. Il est connu d'utiliser une thermistance du type CTN pour « Coefficient de Température Négatif » ou CTP pour « Coefficient de Température Positif » dans un moteur comme un moteur asynchrone. Cependant, cette solution impose d'ajouter un composant supplémentaire au moteur et augmente ainsi son prix. De plus, dans le cas d'un moteur de type sans balais, il n'est pas toujours aisé d'ajouter une thermistance au moteur. Cela oblige à ajouter un composant supplémentaire au moteur et de tirer deux fils supplémentaires.

Une autre solution consiste à surdimensionner le moteur afin qu'il ne se trouve jamais en surchauffe. Cette solution n'est pas très économique car elle augmente le coût du moteur et donc de l'actionneur.

Il est également connu de limiter le temps d'utilisation d'un moteur afin d'éviter qu'il ne surchauffe. A partir d'une durée d'utilisation supérieure à une valeur de seuil prédéterminée un mécanisme empêche le moteur de redémarrer. Le mécanisme impose ensuite au moteur un temps de repos minimal avant d'autoriser un redémarrage du moteur. Cependant, ces différentes durées ne reposent sur aucune mesure de la température du moteur en temps réel mais dépendent de valeurs empiriques. Du fait de ces imprécisions, l'utilisateur peut ne pas comprendre pourquoi il n'arrive pas à démarrer son moteur.

Un but de l'invention est notamment de corriger tout ou partie des inconvénients précités en proposant une solution permettant d'estimer de façon précise la température interne d'un moteur tout en maitrisant la précision de la mesure.

L'invention est divulguée dans les revendications indépendantes 1 et 11.

D'autres particularités et avantages de la présente invention apparaîtront plus clairement à la lecture de la description ci-après, donnée à titre illustratif et non limitatif, et faite en référence aux dessins annexés, sur lesquels :

- La figure 1 est une vue schématique en coupe transversale d'un exemple de mode de réalisation d'une installation domotique selon l'invention ;

- La figure 2 représente une vue schématique en perspective de l'installation domotique illustrée à la figure 1 ;

- La figure 3 est une vue schématique en coupe partielle de l'installation domotique illustrée à la figure 2 comprenant un actionneur électromécanique conforme à un exemple de mode de réalisation de l'invention ;

- La figure 4 représente un premier exemple de mode de réalisation d'une unité électronique de contrôle selon l'invention ;

- La figure 5 représente un schéma équivalent d'un exemple de mode de réalisation d'un dispositif de mesure à précision ajustable connecté électriquement à un moteur lorsqu'il est parcouru par un courant continu ;

- Les figures 6 et 7 représentent d'autre exemples de mode de réalisation d'une unité électronique de contrôle selon l'invention ;

- La figure 8 est un ordinogramme représentant des étapes d'un exemple de mode de mise en œuvre du procédé d'estimation de la température interne d'un moteur.

Par la suite, l'invention va être décrite par rapport à une application à un moteur électrique. Cette description n'est nullement limitative et peut s'appliquer à tout type de machine électrique tournante polyphasée comme des moteurs électriques ou des génératrices d'énergie électrique.

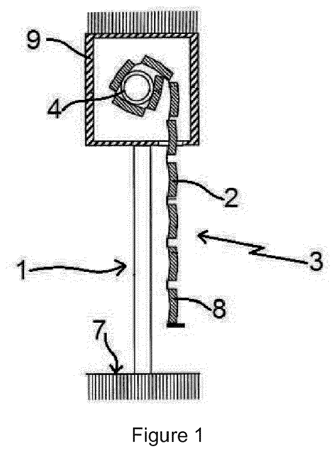

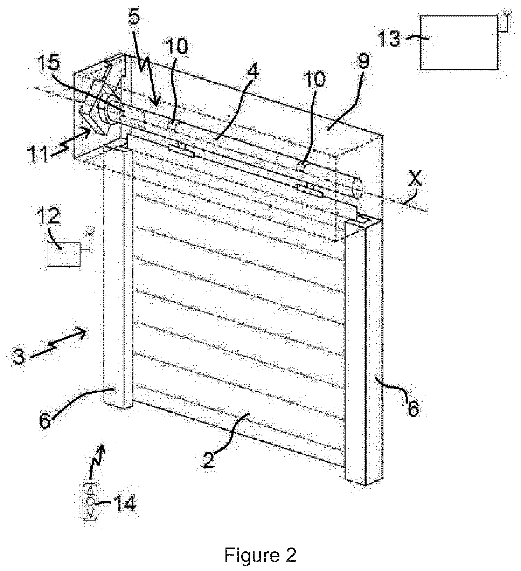

On décrit tout d'abord, en référence aux figures 1 et 2, un mode de réalisation d'une installation domotique de fermeture ou de protection solaire conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, notamment un store de terrasse ou un store vénitien, un portail ou une porte de garage. La présente invention s'applique à tous les types de dispositif d'occultation.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2, où, dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8 en forme de L du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité, ou encore une vitesse de vent.

L'unité de commande locale peut être un point de commande 12, en particulier mural, ou une télécommande 14. L'unité de commande 12, 14 peut comprendre un clavier comprenant des éléments de sélection et/ou des éléments d'activation et, éventuellement, un élément d'affichage, de sorte à permettre à un utilisateur d'intervenir sur l'actionneur électromécanique 11 et/ou l'unité de commande centrale 13.

L'actionneur électromécanique 11 peut être commandé par le point de commande 12 au moyen d'une communication sans fil.

L'actionneur électromécanique 11 est, de préférence, configuré pour exécuter les commandes de déroulement ou d'enroulement de l'écran 2 du dispositif d'occultation 3 pouvant être émises, notamment, par le point de commande 12 ou la télécommande 14.

L'unité de commande 12, 14 peut comprendre un contrôleur et un module d'émission d'ordres de commande. Le module d'émission d'ordres de commande du point de commande peut ainsi permettre l'émission d'ordres par des moyens sans fil. En particulier, le module d'émission d'ordres de commande de l'unité de commande est configuré pour émettre des ordres de commande radioélectriques.

L'unité de commande 12, 14 peut également comprendre un module de réception d'ordres de commande.

Dans un exemple de réalisation, le module d'émission d'ordres de commande et le module réception d'ordres de commande sont compris dans un même module.

En variante, le module d'émission d'ordres de commande et le module réception d'ordres de commande sont compris dans deux modules distincts.

Avantageusement, le point de commande 12 comprend des éléments de fixation, non représentés, en particulier par encliquetage élastique.

Dans un exemple de réalisation, le point de commande 12 est installé sur un montant d'une fenêtre de l'installation domotique. L'assemblage du point de commande 12 sur le montant est mis en œuvre au moyen des éléments de fixation configurés pour coopérer avec un trou ménagé dans le montant.

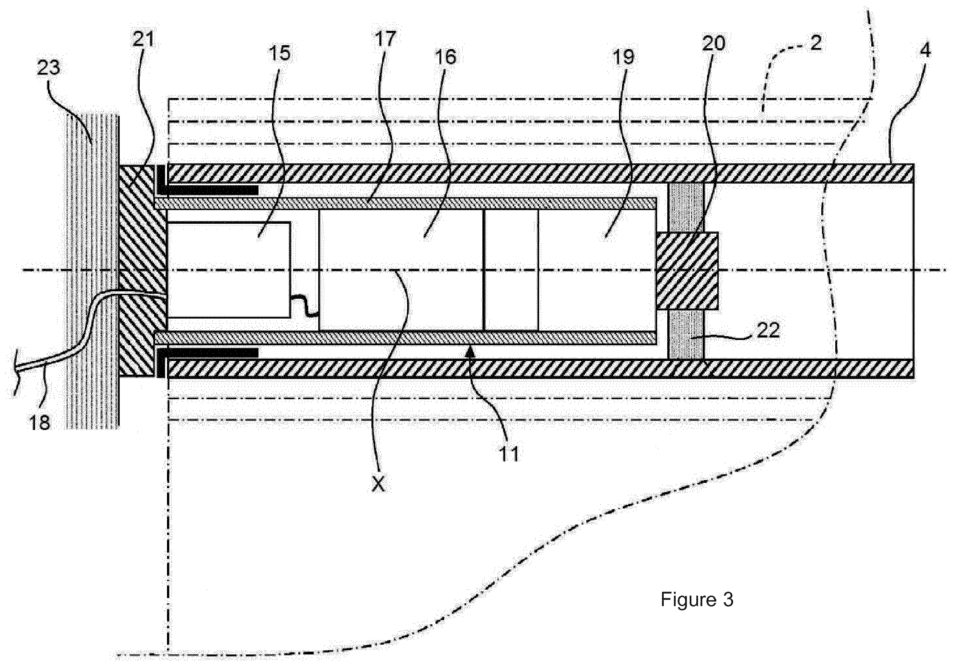

On décrit à présent, plus en détail et en référence à la figure 3, l'actionneur électromécanique 11 appartenant à l'installation domotique des figures 1 et 2.

L'actionneur électromécanique 11 comprend un moteur électrique 16. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique depuis le réseau d'alimentation électrique du secteur.

Des moyens de commande de l'actionneur électromécanique 11 conforme à l'invention, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres de commande 27, en particulier d'ordres électriques émis par un émetteur d'ordres, tel que le point de commande 12 et/ou la télécommande 14 destiné à commander l'actionneur électromécanique 11.

Le module de réception d'ordres de commande de l'unité électronique de contrôle 15 peut ainsi permettre la réception d'ordres transmis par des moyens sans fil. En particulier, le module de réception d'ordres de commande de l'unité électronique de contrôle 15 est configuré pour recevoir des ordres de commande radioélectriques.

Les moyens de commande de l'actionneur électromécanique 11 comprennent des moyens matériels et/ou logiciels.

A titre d'exemple nullement limitatif, les moyens matériels peuvent comprendre au moins un microcontrôleur intégré à l'unité électronique de contrôle 15.

Dans l'exemple de réalisation illustré sur la figure 3, l'unité électronique de contrôle 15 est disposée, autrement dit intégrée, à l'intérieur du carter 17 de l'actionneur électromécanique 11.

Dans un autre exemple de réalisation, l'unité électronique de contrôle 15 est disposée à l'extérieur du carter 17 de l'actionneur électromécanique 11 et, en particulier, montée sur le support 23 ou dans l'élément d'obturation 21.

Le carter 17 de l'actionneur électromécanique 11 est, préférentiellement, de forme cylindrique.

Dans un mode de réalisation, le carter 17 est réalisé dans un matériau métallique. La matière du carter de l'actionneur électromécanique n'est pas limitative et peut être différente. Il peut s'agir, en particulier, d'une matière plastique.

L'actionneur électromécanique 11 comprend également un dispositif de réduction à engrenages 19 et un arbre de sortie 20.

L'actionneur électromécanique 11 peut également comprendre un dispositif de détection de fin de course et/ou d'obstacle, non représenté, pouvant être mécanique et/ou électronique.

Avantageusement, le moteur électrique 16 et le dispositif de réduction à engrenages 19 sont disposés à l'intérieur du carter 17 de l'actionneur électromécanique 11.

L'arbre de sortie 20 de l'actionneur électromécanique 11 est disposé à l'intérieur du tube d'enroulement 4, et au moins en partie à l'extérieur du carter 17 de l'actionneur électromécanique 11.

L'arbre de sortie 20 de l'actionneur électromécanique 11 est accouplé par un élément de liaison 22 au tube d'enroulement 4, en particulier un élément de liaison en forme de roue.

L'actionneur électromécanique 11 comprend également un élément d'obturation 21 d'une extrémité du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

L'installation domotique, en particulier le point de commande 12 et l'actionneur électromécanique 11, notamment le contrôleur 24 et l'unité électronique de contrôle 15, comprend des moyens matériels et/ou logiciels permettant de régir son fonctionnement conformément au procédé objet de l'invention. Les moyens logiciels, peuvent, notamment comprendre un code de programme informatique adapté à la réalisation des étapes du procédé selon l'invention, lorsque le programme est exécuté sur un ordinateur.

L'unité électronique de contrôle 15 est configurée pour être connectée électriquement à une machine électrique tournante polyphasée, comme un moteur électrique 16 ou une génératrice d'énergie électrique 16', afin de le contrôler et/ou de le commander. A cet effet, l'unité électronique de contrôle 15 comprend une pluralité de bornes de sortie. Chaque borne de sortie est configurée pour être connectée électriquement à une borne d'entrée du moteur électrique 16.

L'unité électronique de contrôle 15 comprend un dispositif de mesure à précision variable configuré pour estimer la valeur de la température interne d'un moteur connecté électriquement aux bornes de l'unité électronique de contrôle et à délivrer un signal proportionnel à la température interne du moteur connecté électriquement aux bornes de l'unité électronique de contrôle.

Le dispositif de mesure à précision variable comprend une source d'alimentation, configurée pour délivrer un signal électrique d'alimentation continu, référencé par rapport à une référence de potentiel fixe GND, pendant une durée prédéterminée.

Le dispositif de mesure à précision ajustable comprend un capteur. Le capteur peut être un capteur de courant configuré pour délivrer un signal proportionnel au courant absorbé par le dispositif de mesure à précision ajustable lorsqu'au moins deux bornes de sortie 150 de l'unité électronique de contrôle 15 sont connectés électriquement à des bornes d'entrée 160 du moteur électrique polyphasé 16.

Le dispositif de mesure à précision ajustable comprend également une résistance d'ajustement $R_{ajust}$ dont la valeur détermine la précision de la mesure. La résistance d'ajustement peut être une ou plusieurs résistances de valeur fixe et/ou une résistance variable.

La source d'alimentation en énergie électrique, la résistance d'ajustement $R_{ajust}$ et le capteur $R_{mesure}$ sont connectées électriquement en série et disposés entre deux des bornes de sortie 150 de l'unité électronique de contrôle 15. Le dispositif de mesure peut comprendre un convertisseur analogique-numérique connecté électriquement aux bornes du capteur $R_{mesure}$ afin de relever le signal délivré par ce dernier et fournir un signal échantilloné du signal délivré. Suivant un mode de réalisation, le convertisseur analogique-numérique est une sortie d'un microcontrolleur ou un microprocesseur. Il peut s'agir, par exemple d'une sortie du module de commande.

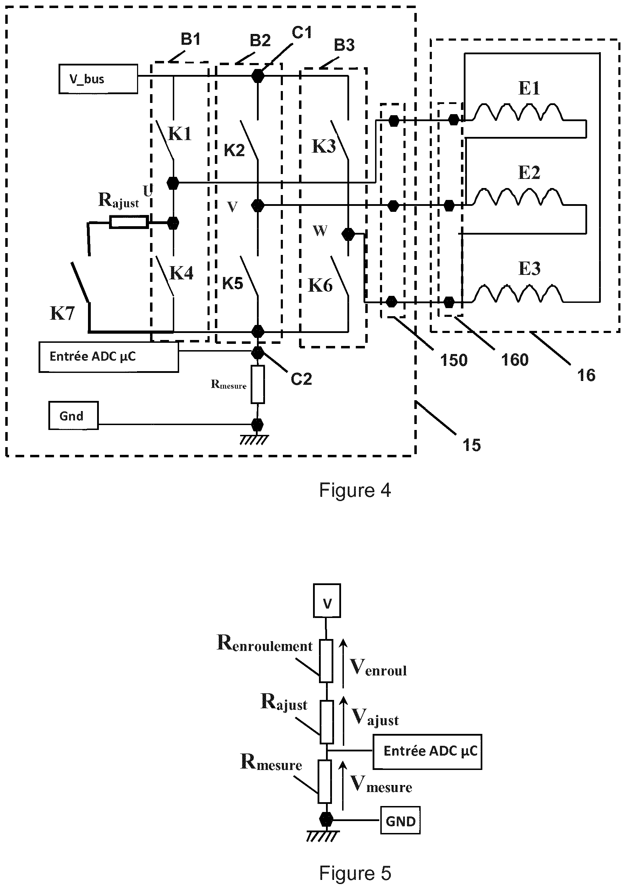

La figure 4 représente un exemple de mode de réalisation d'une unité électronique de contrôle 15.

L'unité électronique de contrôle 15 comprend une pluralité de bornes de sortie 150 configurées pour être connectées électriquement avec la pluralité de bornes d'entrée 160 d'un moteur polyphasé. Dans l'exemple illustré sur la figure 4, l'unité électronique de contrôle 15 comprend trois bornes de sortie destinées à être connectées électriquement avec les trois bornes d'entrée d'un moteur électrique triphasé. Bien entendu, cet exemple n'est nullement limitatif et le moteur électrique 16 peut être un moteur électrique à courant continu, un moteur électrique à courant biphasé ou tout autre type de moteur électrique à courant comprenant un nombre supérieur de phase. De même le nombre de bornes de sortie 150 de l'unité électronique de contrôle 15 sera du nombre de

L'unité électronique de contrôle 15 comprend un onduleur polyphasé configuré pour délivrer, de façon séquentielle, des signaux électriques entre deux bornes de sortie prises parmi la pluralité de bornes de sortie et un dispositif de mesure à précision ajustable configuré pour estimer la température interne du moteur électrique connecté électriquement à l'unite électronique de contrôle.

L'onduleur comporte une pluralité de branches B1, B2, B3 connectées électriquement en parallèle entre un premier point de connexion C1 et un deuxième point de connexion C2. Chaque branche B1, B2, B3 comprend un premier commutateur électronique K1, K2, K3 connecté électriquement au premier point de connexion C1 et connecté électriquement en série avec un deuxième commutateur électronique associé K4, K5, K6. Le deuxième commutateur électronique est connecté électriquement au deuxième point de connexion C2. La commutation simultanée d'un premier commutateur électronique et d'un deuxième commutateur électronique autre que son commutateur électronique associé permet d'alimenter au moins un enroulement E1, E2, E3 du moteur.

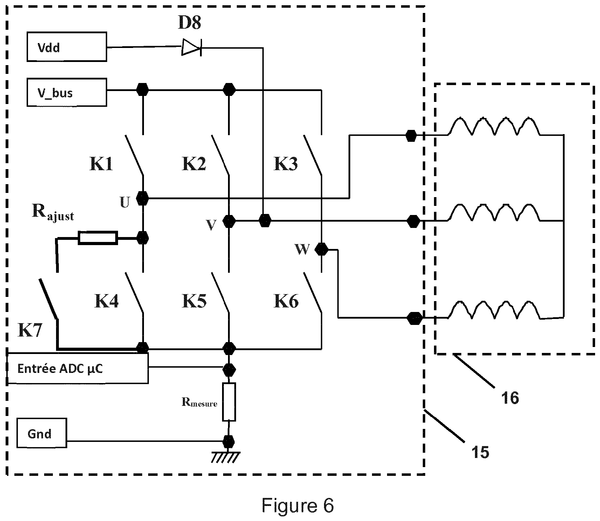

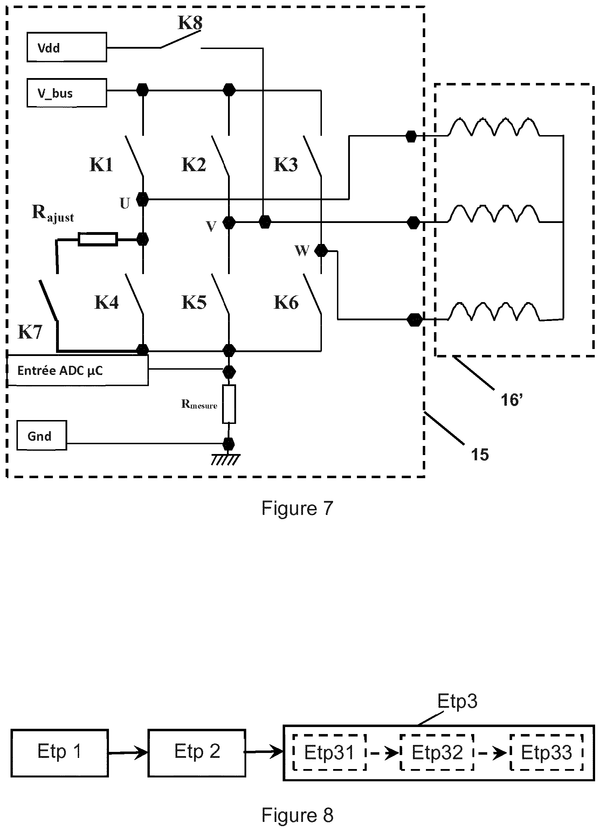

Sur l'exemple de la figure 4, l'onduleur présenté est un onduleur triphasé et le moteur est un moteur électrique triphasé dont les enroulements E1, E2, E3 sont connectés électriquement selon un montage triangle. Cet exemple de montage n'est nullement limitatif. Les enroulements de la machine électrique tournante 16, 16' peurvent être connectés électriquement suivant un montage en étoile comme illustré sur les figures 6 et 7.

La commutation simultanée d'un premier commutateur électronique et d'un deuxième commutateur autre que le commutateur associé au premier commutateur électronique d'un état bloquant à un état passant permet d'alimenter au moins un enroulement E1, E2, E3 du moteur 16.

Un premier point de connexion C1 de l'onduleur est connecté électriquement à une première borne $V_{bus}$ de la source d'alimentation en énergie électrique et un deuxième point de connexion C2 est connecté électriquement à une deuxième borne GND de la source d'alimentation par l'intermédiaire d'un capteur de courant.

A titre illustratif, sur la figure 4, le capteur est une résistance de mesure $R_{mesure}$ (ou « shunt » selon la terminologie anglo saxonne). Lorsqu'un courant traverse la résistance de mesure, cette dernière fournit, à ses bornes, une tension $V_{mesure}$ proportionnelle à la valeur du courant absorbé par le dispositif de mesure à précision ajustable.

Chaque branche B1, B2, B3 de l'onduleur comprend un point milieu connecté électriquement à une borne de sortie.

Les premiers commutateurs électroniques K1, K2, K3 sont répartis dans un premier groupe de commutateurs et les deuxième commutateurs électroniques K4, K5, K6 sont répartis dans un deuxième groupe de commutateurs.

La commutation des commutateurs électroniques K1, K2, K3, K4, K5, K6 est commandée par des signaux de commande générés par un module de commande (non représenté) formant une loi de commande prédéterminée. La loi de commande se décompose en une succession de séquences de commutation, chaque séquence correspondant à un ensemble de signaux pendant une durée déterminée. A chaque commutation d'un premier commutateur électronique K1, K2, K3 et d'un deuxième commutateur électronique autre que son commutateur associé K4, K5, K6 de son état bloquant vers son état passant, au moins un des enroulements E1, E2 et E3 du moteur est alimenté. La loi de commande est programmée de sorte que l'onduleur délivre, de façon séquentielle, une tension entre deux bornes de sortie prise parmi la pluralité de bornes de sortie 150 de l'unité électronique de contrôle 15.

Lorsque les bornes d'entrée 160 d'un moteur électrique 16 sont connectées électriquement aux bornes de sortie 150 de l'unité électronique de contrôle 15, les signaux électriques délivrés par l'onduleur, sont programmés pour alimenter séquentiellement les enroulements du stator du moteur électrique polyphasé afin de générer un champ électrique tournant apte à entrainer le rotor en rotation.

Un convertisseur analogique numérique est connecté électriquement aux bornes du capteur afin de mesurer le signal proportionnel au courant circulant dans le dispositif de mesure à précision ajustable. Selon un mode de réalisation, l'entrée du convertisseur peut être une entrée d'un microcontrôleur ou d'un microprocesseur. Il peut s'agir, par exemple, d'un microcontrôleur appartenant au module de commande pilotant les commutateurs électroniques, K1, K2, K3, K4, K5, K6 de l'onduleur.

Sur l'exemple de la figure 4, la source d'alimentation en énergie électrique de l'onduleur est commune avec celle du dispositif de mesure à précision ajustable.

La résistance d'ajustement $R_{ajust}$ est connecté électriquement en série avec un commutateur électronique K7, dit septième commutateur. La résistance d'ajustement $R_{ajust}$ et le septième commutateur électronique K7 sont connectés électriquement entre le point milieu U d'une branche B1 de l'onduleur et un point de connexion C2 de l'onduleur. Le commutateur électronique K7 peut être par exemple un transistor, un triac ou tout autre type de commutateur électronique équivalent. Le commutateur électronique K7 peut être, par exemple, être commandé par le module de commande pilotant les commutateurs électroniques, K1, K2, K3, K4, K5, K6 de l'onduleur.

Le septième commutateur électronique K7, connecté électriquement en série avec la résistance d'ajustement, est destiné à fonctionner avec un commutateur électronique associé K2, K3 faisant partie d'une branche de l'onduleur différente de celle sur laquelle est connecté électriquement le septième commutateur électronique K7. De plus, le commutateur électronique associé K2, K3 au septième commutateur électronique K7 fait partie d'un groupe de commutateurs différent de celui auquel appartient le septième commutateur K7.

Le septième commutateur K7 et son premier commutateur associé K2 et/ou K3 sont configurés pour commuter ensemble d'un état bloqué vers un état passant pendant un intervalle de temps prédéterminé afin que la source d'alimentation en énergie électrique puisse délivrer un signal d'alimentation continu pendant ce même intervalle de temps prédéterminé. La commutation des commutateurs électronique K2, K3, K7 peut être assurée, par exemple, par le module de commande.

Suivant une variante de réalisation, la source d'alimentation en énergie électrique est connectée électriquement à un microprocesseur ou microcontrôleur, par exemple, une sortie du module de commande, le microprocesseur étant programmé pour commuter la sortie de la source d'alimentation dans un état passant pendant l'intervalle de temps prédéterminé.

En référence à la figure 4, lorsque le septième commutateur K7 et son commutateur associé K2 et/ou K3 sont dans un état passant, un courant continu circule dans le dispositif de mesure à précision ajustable et dans au moins un enroulement du moteur connecté électriquement à l'unité électronique de contrôle.

La figure 5 représente un exemple de schéma équivalent du système formé par le dispositif de mesure à précision ajustable lorsqu'il est traversé par un courant continu et lorsqu'au moins un enroulement d'un moteur électrique est connecté électriquement à ses bornes. Sur ce schéma, on suppose que la source d'alimentation en énergie électrique continue délivre une tension V.

La figure 6 représente un deuxième mode de réalisation d'une unité électronique de contrôle 15. Dans ce mode de réalisation, la source d'alimentation en énergie électrique Vcc du dispositif de mesure à précision ajustable et la source d'alimentation en énergie électrique $V_{bus}$ de l'onduleur sont différentes. Suivant un mode de réalisation, la source d'alimentation en énergie électrique du dispositif de mesure à précision ajustable peut être une source basse tension, délivrant par exemple, une tension continue de l'ordre de 12V. La source d'alimentation de l'onduleur peut être une source haute tension délivrant une tension continue d'amplitude supérieure à 42V. Le recours à une source d'alimentation délivrant une tension d'amplitude inférieure à celle de la source d'alimentation de l'onduleur permet de faire circuler dans le dispositif de mesure, et donc dans la résistance ajustable, un courant d'amplitude plus faible lors de la mesure de la température interne du moteur. De façon avantageuse, cela permet de diminuer l'énergie dissipée, par exemple, dans la résistance d'ajustement pendant l'étape de mesure.

La source d'alimentation en énergie électrique du dispositif de mesure à précision ajustable peut être connectée électriquement au point milieu V d'une branche B2, de l'onduleur, différente de la branche B1 sur laquelle est connecté électriquement le septième commutateur électronique K7.

Suivant un autre mode de réalisation illustré sur la figure 6, la source d'alimentation en énergie électrique du dispositif de mesure à précision ajustable est connectée électriquement au point milieu d'une branche de l'onduleur par l'intermédiaire d'une diode D8. La diode D8 est configurée pour ne laisser passer le courant que de la source d'alimentation du dispositif de mesure à précision ajustable vers le point milieu V de la branche sur laquelle la diode est connecté électriquement. De façon avantageuse, lorsque l'onduleur est alimenté, la diode D8 permet de bloquer le courant remontant vers l'alimentation du dispositif de mesure à précision ajustable.

La figure 7 présente un autre mode de réalisation de l'unité électronique de contrôle. Dans ce mode de réalisation la source d'alimentation en énergie électrique du dispositif de mesure à précision ajustable est connectée électriquement au point milieu V d'une branche de l'onduleur, différente de la branche B1 sur laquelle est connecté électriquement le septième commutateur électronique K7, par l'intermédiaire d'un huitième commutateur électronique K8. Le huitième commutateur électronique K8 peut être, par exemple, un transistor, un triac ou tout autre type de commutateur électronique équivalent. Le commutateur K8 est destiné à commuter simultanément avec le deuxième commutateur K4 du dispositif de mesure à précision ajustable. De façon avantageuse, lorsque l'onduleur est alimenté, le huitième commutateur K8 permet d'éviter au courant circulant dans l'onduleur de remonter vers l'alimentation du dispositif de mesure à précision ajustable. Le huitième commutateur électronique K8 peut, par exemple, être commandé par le module de commande pilotant les commutateurs électroniques, K1, K2, K3, K4, K5, K6 de l'onduleur. Sur cette figure, chaque borne de sortie 150 de l'unité électronique de contrôle 15 est connectée électriquement à une borne d'entrée 160 d'une génératrice d'énergie électrique polyphasée 16'.

Un autre objet de l'invention est un actionneur électromécanique, par exemple, configuré pour la manœuvre d'un élément mobile. L'actionneur comprend une unité électronique de contrôle telle que décrite précédemment et un moteur électrique polyphasé dont les bornes d'entrées sont connectées électriquement aux bornes de sortie de l'unité électronique de contrôle.

Selon un mode de réalisation, l'unité électronique de contrôle de l'actionneur électromécanique comprend un module de commande configuré pour piloter le moteur électrique de l'actionneur. Le module de commande est également configuré pour tester la température interne du moteur électrique avant chaque tentative de démarrage dudit moteur. A cet effet, le module de commande compare la valeur du signal délivré par le dispositif de mesure avec une valeur de seuil prédéterminée correspondant à une température de seuil. Si la température interne du moteur électrique est inférieure à une valeur de seuil prédéterminée, le module de commande autorise le démarrage du moteur. Dans le cas contraire, si la valeur de la température interne du moteur est strictement supérieure à la valeur de seuil prédéterminée, le module de commande bloque le démarrage du moteur électrique.

Suivant un autre mode de réalisation, le module de commande est configuré pour comparer la valeur du signal délivré par le dispositif de mesure avec une consigne prédéterminée.

La présente invention a également pour objet un procédé d'estimation de la température interne d'une machine électrique tournante polyphasée.

La figure 8 présente les principales étapes d'un exemple de mise en œuvre d'un procédé d'estimation de la température interne d'un moteur selon l'invention. Il peut s'agir du moteur d'un actionneur électromécanique configuré pour la manœuvre d'un élément mobile. Le procédé est mis en œuvre par une unité électronique de contrôle telle que décrite précédemment et notamment par le dispositif de mesure à précision ajustable.

Le procédé comprend une première étape Etp1 d'alimentation d'au moins un enroulement du moteur en appliquant une tension continue entre deux bornes de sortie de l'unité électronique de contrôle pendant un intervalle de temps prédéterminé.

Au cours de la première étape Etp1, une tension continue est appliquée entre deux bornes de sorties de l'unité électronique de contrôle par l'intermédiaire du dispositif de mesure à précision ajustable. La tension est appliquée pendant un intervalle de temps prédéterminé. La durée de l'intervalle de temps dépend des paramètres du ou des enroulements du moteur connecté électriquement aux bornes de sortie de l'unité électronique de contrôle entre lesquelles une tension est appliquée. Ces paramètres sont la résistance et l'inductance du ou des enroulements. La durée de l'intervalle de temps prédéterminée est choisie de sorte qu'elle soit supérieure à la constante de temps des enroulements alimentés afin d'être dans un régime permanent continu. En régime continu les enroulements se comportent comme des résistances. De façon avantageuse, cela permet d'éviter d'être perturbé par les effets de l'inductance des enroulements. Pour rappel, la constante de temps est donnée par la formule :

$$\tau = \frac{L}{R}$$

Dans laquelle : $\tau$ représente la constante de temps,

L représente l'inductance du ou des enroulements alimentés,
R représente la résistance du ou des enroulements alimentés.

A titre illustratif, avec une inductance du ou des enroulements alimentés de 1,2 mH et une résistance du ou des enroulements alimentés de 1,2$\Omega$, on obtient une constante de temps de 1ms.

De façon préférentielle, la durée de l'intervalle de temps prédéterminée est choisie proche de la constante de temps, mais toujours supérieure à la constante de temps des enroulements alimentés, afin de réduire le temps pendant lequel un courant circule dans le dispositif de mesure à précision ajustable et donc de réduire l'énergie dissipée dans la résistance d'ajustement pendant la mesure. De façon avantageuse, lors du dimensionnement de la résistance ajustable, cela permet de réduire la puissance maximale acceptable par la résistance.

La valeur de la résistance du ou des enroulements alimentés variant en fonction de la température, la valeur de la constante de temps $\tau$ est déterminée en considérant un pire cas pour estimer la valeur de la résistance d'enroulement. A titre d'exemple, lorsque les enroulements sont réalisés en cuivre ou en aluminium, le pire cas correspond à la plus basse température que pourraient atteindre les enroulement du moteur électrique.

Lors de cette étape, le rotor n'est pas entrainé en rotation, la mesure de la température interne du moteur est réalisé lorsque le moteur est à l'arrêt.

Le procédé d'estimation comprend ensuite une étape Etp2 de mesure du courant circulant dans le dispositif de mesure à précision ajustable pendant l'intervalle de temps prédéterminé. On suppose que l'amplitude du courant circulant dans le dispositif de mesure à précision ajustable est sensiblement égale à celle du courant total circulant dans le ou les enroulements alimentés pendant l'intervalle de temps prédéterminé. La mesure du courant est obtenue par l'intermédiaire du capteur de courant comme une résistance de mesure. La valeur du signal proportionnel au courant est relevée par un convertisseur analogique-numérique, par exemple une entrée analogique-numérique d'un microcontôleur ou d'un micro processeur.

Enfin, le procédé d'estimation comprend une étape Etp3 d'estimation de la température interne du moteur à partir du signal proportionnel au courant circulant dans le dispositif de mesure à précision ajustable.

Les enroulements des moteurs électriques sont généralement réalisés en cuivre, métal dont la résistance varie en fonction de la température. La valeur de la résistance des enroulements d'un moteur électrique variant en fonction de la température, cet élément peut servir de capteur de température pour estimer la température interne du moteur électrique. De façon avantageuse, cette solution permet d'obtenir un signal proportionnel à la température interne du moteur sans avoir à modifier le moteur ni ajouter de composant additionnel au moteur.

Par la suite la résistance du ou des enroulements alimentés sera nommée « résistance d'enroulement ».

La valeur de la résistance d'enroulement d'un moteur électrique peut être définie par la relation :

$$R_{enroul} = R_{T0} + \alpha(T-T_0) \qquad (1)$$

Dans laquelle : T représente la température d'enroulement,

$T_0$ représente une température prédéterminée,
$R_{T0}$ représente la valeur de la résistance d'enroulement à la température $T_0$,
$R_{enroul}$ représente la valeur de la résistance d'enroulement à la température T,
$\alpha$ représente la sensibilité de la résistance d'enroulement en fonction de la température. Ce coefficient dépend de la nature du métal des enroulements.

Lorsque le circuit du dispositif de mesure à précision ajustable est fermé par au moins un enroulement d'un moteur électrique, que le capteur de courant est une résistance de mesure $R_{mesure}$ et lorsqu'un courant I circule dans le dispositif de mesure à précision ajustable, le courant produit, aux bornes du ou des enroulements alimentés, une tension $V_{enroul}$. Le courant produit également une tension $V_{ajust}$ aux bornes de la résistance d'ajustement $R_{ajust}$ et une tension

$V_{mesure}$ aux bornes de la résistance de mesure $R_{mesure}$. En référence à la figure 5, dans ce cas de figure on a la relation :

$$V_{enroul} + V_{ajust} + V_{mesure} = (R_{enroul} + R_{ajust} + R_{mesure})*I = V \qquad (2)$$

Dans laquelle V représente l'amplitude de la tension délivrée par la source d'alimentation en énergie électrique continue.

On a donc la relation :

$$R_{enroul} = \frac{V}{I} - (R_{ajust} + R_{mesure}) \qquad (3)$$

La mesure de la tension $V_{mesure}$ aux bornes de la résistance de mesure $R_{mesure}$ permet de connaitre la valeur du courant I circulant dans le dispositif de mesure à précision ajustable par la relation :

$$V_{mesure} = R_{mesure}*I \text{ donc } I = V_{mesure} / R_{mesure} \qquad (4)$$

Les relations (3) et (4) permettent d'écrire :

$$R_{enroul} = \frac{V*R_{mesure}}{V_{mesure}} - (R_{ajust} + R_{mesure}) \qquad (5)$$

Comme énoncé précédemment, la valeur de la résistance d'enroulement est également définie par la relation (1). Cette relation permet d'écrire :

$$T = \frac{1}{\alpha}(\alpha T_0 + R_{enroul} - R_{T0}) \qquad (6)$$

Finalement, en intégrant la valeur estimée de la résistance d'enroulement $R_{enroul}$ à l'aide de la relation (5), dans la relation (6) on peut déterminer la température du ou des enroulements alimentés pendant l'étape Etp2 de mesure. Si on considère que chaque enroulement du moteur a la même température et que la température interne du moteur est égale à la température de ses enroulements, les relations (5) et (6) permettent d'estimer la température interne du moteur électrique.

Suivant un mode de mise en œuvre l'étape Etp3 d'estimation de la température interne du moteur peut comprendre une sous-étape Etp31 d'estimation de l'amplitude du courant circulant dans le dispositif de mesure à précision ajustable à l'aide du signal fourni par le capteur. L'étape d'estimation peut ensuite comprendre une sous-étape Etp32 d'estimation de la valeur de la résistance d'enroulement à partir de la valeur du courant estimé et enfin, une sous étape Etp33 d'estimation de la température interne du moteur à l'aide de la valeur de la résistance d'enroulement.

La présente invention a également pour objet un procédé de conception d'une unité électronique de contrôle apte à commander une machine tournante polyphasée 16, 16' telle que décrite précédemment. Le procédé de conception comprend une étape de dimensionnement de la valeur d'une résistance d'ajustement du dispositif de mesure à précision ajustable.

L'étape de dimensionnement comprend une première étape de choix de la sensibilité souhaitée pour l'estimation de la température interne du moteur électrique.

L'étape de dimensionnement comprend ensuite une étape d'estimation de la valeur de la résistance totale du système formé par le dispositif de mesure à précision ajustable et le moteur électrique 16 connecté électriquement audit dispositif de mesure à précision ajustable.

On se réfère à la figure 5 et on considère une variation $\Delta T$ de la température des enroulements alimentés, égale à la sensibilité souhaitée. En référence aux relations (1) et (2), une variation de température $\Delta T$ entraine une variation $\Delta R$ de la valeur de la résistance d'enroulement et une variation -$\Delta I$ du courant circulant dans le circuit.

La relation (1) permet d'écrire la relation :

$$\Delta R = \alpha.\Delta T \qquad (7)$$

Dans laquelle : $\Delta T$ représente la variation de température d'enroulement,

$\Delta R$ représente la variation de la résistance d'enroulement due à la variation de température $\Delta T$

$\alpha$ représente la sensibilité de la résistance d'enroulement en fonction de la température.

La variation de la valeur de la résistance d'enroulement $\Delta R$ est donc directement proportionnelle à la variation de la température $\Delta T$.

Soit $R_g$ la résistance totale du circuit à une température donnée. La valeur de la résistance totale est égale à :

$$R_g = R_{enroul} + R_{ajust} + R_{mesure} \qquad (8)$$

Dans laquelle : $R_g$ représente la valeur de la résistance totale du circuit à

une température donnée,
$R_{enroul}$ représente la valeur de la résistance d'enroulement
à la température prédéterminée T,
$R_{ajust}$ représente la valeur de la résistance d'ajustement,
$R_{mesure}$ représente la valeur de la résistance de mesure.

Soit I la valeur du courant circulant dans le circuit à la température prédéterminée T, on a la relation :

$$V = R_g.I \qquad (9)$$

La variation de courant $-\Delta I$ due à la variation de température $\Delta T$ est égale à :

$$-\Delta I = (I - \Delta I) - I \qquad (10)$$

Grace aux relations (7) et (8) on a les relations :

$$\Delta I = \frac{V}{R_g} - \frac{V}{R_{g+\Delta R}} \qquad (11)$$

$$\Delta I = \frac{V}{R_g} - \frac{V}{R_g + \alpha.\Delta T} \qquad (12)$$

Soit $\delta T$ la sensibilité en température souhaitée pour le dispositif de mesure à précision ajustable.

Le quantum du convertisseur analogique-numérique connecté électriquement aux bornes du capteur de courant $R_{mesure}$ est donné par la relation ;

$$q = \frac{V}{N} \qquad (13)$$

Dans laquelle : q représente le quantum du convertisseur analogique-numérique,

V représente la valeur de la tension aux bornes du circuit,
N représente le nombre de bits du convertisseur analogique-numérique,

En référence aux figures 4, 6 et 7, la valeur de la tension aux bornes du circuit est égale respectivement à V_bus, Vdd et (Vdd-Vd), Vd représentant la valeur de la chute de tension due à la diode D8.

Soit $\delta I$ la variation de courant due à une variation de la température des enroulements alimentés égale à $\delta T$.

Si l'on souhaite que le dispositif de mesure à précision ajustable ait la sensibilité souhaitée, il faut que le convertisseur analogique-numérique connecté électriquement aux bornes du capteur de courant soit dimensionné de sorte à pouvoir mesurer le signal proportionnel à une valeur de courant égale à $\delta I$. Il faut donc que :

$$q = R_{mesure} \, \delta I \qquad (14)$$

La résolution du système formé par les relations (12) et (14) permet d'estimer la valeur de la résistance totale du système formé par le dispositif de mesure à précision ajustable et le moteur électrique connecté électriquement audit dispositif de mesure à précision ajustable. En utilisant les notations précédentes, on obtient l'équation suivante :

$$q.R_g^2 + q.\alpha.\delta T.R_g - \alpha.\delta T.R_{mesure}.V = 0 \qquad\qquad (15)$$

La résolution de l'équation (15) permet d'estimer la valeur de la résistance totale du système formé par le dispositif de mesure à précision ajustable et le moteur électrique connecté électriquement audit dispositif de mesure à précision ajustable.

A partir de la valeur estimée de la résistance totale du système et de la relation (8), on peut déduire la valeur de la résistance d'ajustement à placer dans le dispositif de mesure à précision ajustable afin d'obtenir la sensibilité souhaitée pour l'estimation de la température interne du moteur.

L'étape de dimensionnement peut ensuite comprendre une étape d'estimation de la puissance dissipée dans la résistance d'ajustement ainsi que l'énergie dissipée dans la résistance d'ajustement pendant le temps prédéterminé de mesure.

A titre illustratif, on se réfère à la figure 7. On suppose que la source d'alimentation en énergie électrique du dispositif de mesure à précision ajustable délivre une tension égale à 3,3V, qu'à la température de 25°C la valeur de la résistance d'enroulement est égale à 0,7Ω et qu'à la température de 100°C la valeur de la résistance d'enroulement est égale à 0,9Ω. On suppose également que le capteur de courant est une résistance de mesure d'une valeur de 0,33Ω et que le convertisseur analogique-numérique connecté électriquement aux bornes du capteur de courant est un convertisseur de 12 bits.

Dans ces conditions, si l'on souhaite que le dispositif de mesure à précision ajustable ait une sensibilité égale à 1°C, en résolvant l'équation (15) on obtient une valeur de la résistance d'ajustement égale à 2,85Ω.

Dans les mêmes conditions, si l'on souhaite que le dispositif de mesure à précision ajustable ait une sensibilité égale à 5°C, on obtient une valeur de la résistance d'ajustement égale à 7,05Ω.

En référence à la figure 4, l'unité électronique de contrôle selon l'invention se distingue d'un circuit de commande classique de moteur polyphasé par la résistance d'ajustement $R_{ajust}$ et l'interrupteur électronique K7. De façon avantageuse, l'ajout de ces deux composants permet d'obtenir une mesure précise de la température des enroulements du moteur connecté électriquement aux bornes de l'unité électronique de contrôle. Le choix de la valeur de la résistance d'ajustement permet de définir la valeur de la précision souhaitée

Les différents modes de mise en œuvre, différents modes de réalisation et variantes définis ci-dessus peuvent être combinés afin de générer de nouveaux modes de mise en œuvre et de nouveaux modes de réalisation de l'invention.

## Revendications

1. Unité électronique de contrôle (15) configurée pour commander une machine électrique tournante polyphasée (16, 16'), l'unité électronique de contrôle (15) comprenant une pluralité de bornes de sortie (150), chaque borne de sortie (150) étant configurée pour être connectée électriquement à une borne d'entrée (160) de la machine électrique tournante polyphasée (16, 16'), l'unité électronique de contrôle étant **caractérisée en ce qu'**elle comprend un dispositif de mesure à précision ajustable comportant :

   - une source d'alimentation en énergie électrique (V_bus, Vdd) configurée pour délivrer un signal d'alimentation continu, le signal d'alimentation étant délivré pendant un intervalle de temps prédéterminé,
   - une résistance d'ajustement ($R_{ajust}$) configurée pour fixer la précision de la mesure du dispositif de mesure,
   - un capteur ($R_{mesure}$) configuré pour délivrer un signal proportionnel au courant absorbé par le dispositif de mesure lorsqu'au moins deux des bornes de sortie (150) de l'unité électronique de contrôle (15) sont connectées électriquement à des bornes d'entrée (160) de la machine électrique tournante polyphasée (16, 16'),

   la source d'alimentation en énergie électrique (V_bus, Vdd), la résistance d'ajustement ($R_{ajust}$) et le capteur ($R_{mesure}$) étant connectés électriquement en série et disposés entre deux des bornes de sortie (150) de l'unité électronique de contrôle (15), le dispositif de mesure à précision ajustable comprenant en outre un commutateur électronique (K7), dit septième commutateur, configuré pour limiter dans le temps la délivrance du signal d'alimentation de la source d'alimentation en énergie électrique (V_bus, Vdd) du dispositif de mesure à précision ajustable de l'unité électronique de contrôle.

2. Actionneur électromécanique **caractérisé en ce qu'**il comprend une unité électronique de contrôle (15) selon la revendication 1, comprenant un onduleur polyphasé comprenant une pluralité de bornes de sortie (150) et une machine électrique tournante polyphasée (16, 16') comprenant une pluralité de bornes d'entrée (160), chaque borne d'entrée de la machine tournante étant connecté électriquement à une borne de sortie de l'unité électronique de contrôle, l'unité électronique de contrôle (15) étant configurée pour estimer la température interne de la machine tournante polyphasée (16, 16') au moyen du dispositif de mesure à précision ajustable.

3. Actionneur électromécanique selon la revendication précédente dans laquelle la valeur de la résistance ajustable ($R_{ajust}$) est déterminée en fonction de la précision souhaitée pour la mesure du dispositif de mesure, de paramètres de la source d'alimentation en énergie électrique, de paramètres du convertisseur analogique-numérique et de paramètres de la machine électrique tournante (16, 16').

4. Actionneur électromécanique selon la revendication précédente dans lequel la machine tournante électrique polyphasée est un moteur électrique polyphasé (16).

5. Actionneur électromécanique selon la revendication précédente, dans lequel l'onduleur comporte une pluralité de branches (B1, B2, B3) connectées électriquement en parallèle entre un premier point de connexion (C1) et un deuxième point de connexion (C2), chaque branche (B1, B2, B3) comprenant un premier commutateur électronique (K1, K2, K3) connecté électriquement au premier point de connexion (C1) et connecté électriquement en série avec un deuxième commutateur électronique associé (K4, K5, K6), le deuxième commutateur électronique étant connecté électriquement au deuxième point de connexion (C2) et tel que la commutation simultanée d'un premier commutateur électronique (K1, K2, K3) et d'un deuxième commutateur électronique (K4, K5, K6) autre que son commutateur électronique associé permet d'alimenter au moins un enroulement (E1, E2, E3) de la machine tournante électrique polyphasée, le septième commutateur électronique (K7) étant commandé par un module de commande pilotant également les premiers et deuxièmes commutateurs électroniques (K1, K2, K3, K4, K5, K6) de l'onduleur.

6. Actionneur électromécanique selon la revendication précédente, dans lequel le septième commutateur électronique (K7) et un premier commutateur électronique associé (K2, K3) sont configurés pour commuter ensemble d'un état bloqué vers un état passant pendant un intervalle de temps prédéterminé.

7. Actionneur électromécanique selon l'une des revendications 5 ou 6, dans lequel la source d'alimentation en énergie électrique du dispositif de mesure à précision ajustable est connectée électriquement en un point milieu (V) d'une branche (B1, B2, B3) de l'onduleur, différente de la branche (B1, B2, B3) sur laquelle est connecté électriquement le septième commutateur électronique (K7), par l'intermédiaire d'un autre commutateur électronique (K8), dit huitième commutateur, celui-ci étant destiné à commuter simultanément avec un deuxième commutateur (K4, K5, K6) du dispositif de mesure à précision ajustable.

8. Actionneur électromécanique selon une des revendications 2 à 7 dans lequel l'unité électronique de contrôle (15) comprend un module de commande configuré pour tester la température interne du moteur avant chaque tentative de démarrage de la machine tournante (16, 16') et autoriser le démarrage de la machine tournante (16, 16'), seulement si la température interne de la machine électrique tournante polyphasée (16, 16') est inférieure à une valeur de seuil prédéterminée.

9. Dispositif domotique **caractérisé en ce qu'**il comprend un actionneur selon une des revendications 2 à 8.

10. Ensemble de motorisation d'écran de fermeture ou de protection solaire, **caractérisé en ce qu'**il comprend un actionneur électromécanique selon une des revendications 2 à 8.

11. Procédé d'estimation de la température interne d'une machine

électrique tournante polyphasée (16, 16') comprenant une pluralité de bornes d'entrée (160) et une pluralité d'enroulements (E1, E2, E3), chaque borne d'entrée de la machine tournante étant connecté électriquement à une borne de sortie d'une unité électronique de contrôle selon la revendication 1, l'unité électronique de contrôle (15) comprenant en outre un dispositif de mesure à précision ajustable comportant :

- une source d'alimentation en énergie électrique (V_bus, Vdd) configurée pour délivrer un signal d'alimentation continu, le signal d'alimentation étant délivré pendant un intervalle de temps prédéterminé,
- une résistance d'ajustement ($R_{ajust}$) configurée pour fixer la précision de la mesure du dispositif de mesure,
- un capteur ($R_{mesure}$) configuré pour délivrer un signal proportionnel au courant absorbé par le dispositif de mesure lorsque au moins deux des bornes de sortie (150) de l'unité électronique de contrôle (15) sont connectées électriquement à des bornes d'entrée (160) de la machine électrique tournante polyphasée (16, 16'),

la source d'alimentation en énergie électrique (V_bus, Vdd), la résistance d'ajustement ($R_{ajust}$) et le capteur ($R_{mesure}$) étant connectés électriquement en série et disposés entre deux des bornes de sortie (150) de l'unité électronique de contrôle (15), le dispositif de mesure à précision ajustable comprenant en outre un commutateur électronique (K7), dit septième commutateur, configuré pour limiter dans le temps la délivrance du signal d'alimentation de la source d'alimentation en énergie électrique (V_bus, Vdd) du dispositif de mesure à précision ajustable de l'unité électronique de contrôle,
le procédé étant **caractérisé en ce qu'**il comprend :

- une étape (Etp1) d'établissement d'une tension continue entre deux bornes de sortie (150) de l'unité électronique de contrôle (15) pendant un intervalle de temps prédéterminé à l'aide de la source d'alimentation en énergie électrique (V_bus, Vdd), le rotor n'étant pas entrainé en rotation lors de cette étape, la mesure de la température interne du moteur étant réalisée lorsque le moteur est à l'arrêt,
- une étape (Etp2) de fourniture, par le capteur ($R_{mesure}$), d'un signal représentatif d'un courant absorbé par le dispositif de mesure pendant l'intervalle de temps prédéterminé,
- une étape (Etp3) d'estimation de la température interne de la machine électrique tournante (16, 16') à partir du signal fourni par le capteur ($R_{mesure}$), la valeur de la précision de l'estimation étant définie par la valeur de la résistance d'ajustement ($R_{ajust}$).

12. Procédé selon la revendication précédente dans lequel l'étape (Etp3) d'estimation de la température interne comprend :

- une sous-étape (Etp31) d'estimation de l'amplitude d'un courant circulant dans le dispositif de mesure à précision ajustable à l'aide du signal fourni par le capteur ($R_{mesure}$),
- une sous-étape (Etp32) d'estimation de la valeur de la résistance ($R_{enroul}$) d'au moins un enroulement (E1, E2, E3) de la machine tournante (16, 16') à partir de la valeur du courant estimé,
- une sous-étape (Etp33) d'estimation de la température interne de la machine électrique tournante (16, 16') à l'aide de la valeur de la résistance ($R_{enroul}$) d'au moins un enroulement (E1, E2, E3).

**Patentansprüche**

1. Elektronische Steuereinheit (15), die so konfiguriert ist, dass sie eine mehrphasige rotierende elektrische Maschine (16, 16') steuert, wobei die elektronische Steuereinheit (15) eine Vielzahl von Ausgangsanschlüssen (150) umfasst, wobei jeder Ausgangsanschluss (150) so konfiguriert ist, dass er elektrisch mit einem Eingangsanschluss (160) der mehrphasigen rotierenden elektrischen Maschine (16, 16') verbunden ist, wobei die elektronische Steuereinheit **dadurch gekennzeichnet ist, dass** sie eine Messvorrichtung mit einstellbarer Genauigkeit umfasst, die umfasst:

- eine Stromversorgungsquelle (V_bus, Vdd), die so konfiguriert ist, dass sie ein kontinuierliches Stromversorgungssignal liefert, wobei das Stromversorgungssignal während eines vorbestimmten Zeitintervalls geliefert wird,
- einen Einstellwiderstand ($R_{ajust}$) , der so konfiguriert ist, dass er die Genauigkeit der Messung der Messvorrichtung festlegt ,
- einen Sensor ($R_{mesure}$), der so konfiguriert ist, dass er ein Signal ausgibt, das proportional zu dem Strom ist, der von der Messvorrichtung aufgenommen wird, wenn mindestens zwei der Ausgangsanschlüsse (150) der elektronischen Steuereinheit (15) elektrisch mit Eingangsanschlüssen (160) der mehrphasigen rotierenden elektrischen Maschine (16, 16') verbunden sind,

wobei die elektrische Energieversorgungsquelle (V_bus, Vdd), der Einstellwiderstand ($R_{ajust}$) und der Sensor ($R_{mesure}$) elektrisch in Reihe geschaltet und zwischen zwei der Ausgangsanschlüsse 150) der elektronischen Steuereinheit (15) angeordnet sind, wobei die Messvorrichtung mit einstellbarer Genauigkeit außerdem einen elektronischen Schalter (K7), den sogenannten siebten Schalter, umfasst, der so konfiguriert ist, dass er die Ausgabe des Versorgungssignals der elektrischen Energieversorgungsquelle (V_bus, Vdd) der Messvorrichtung mit einstellbarer Genauigkeit der elektronischen Steuereinheit zeitlich begrenzt.

2. Elektromechanischer Aktuator, **dadurch gekennzeichnet, dass** er eine elektronische Steuereinheit (15) nach Anspruch 1 umfasst, die einen mehrphasigen Wechselrichter mit einer Vielzahl von Ausgangsanschlüssen (150) und eine mehrphasige rotierende elektrische Maschine (16, 16') mit einer Vielzahl von Eingangsanschlüssen (160) umfasst, wobei jeder Eingangsanschluss der rotierenden Maschine elektrisch mit einem Ausgangsanschluss der elektronischen Steuereinheit verbunden ist, wobei die elektronische Steuereinheit (15) so konfiguriert ist, dass sie die Innentemperatur der mehrphasigen rotierenden Maschine (16, 16') mithilfe der Messvorrichtung mit einstellbarer Genauigkeit schätzt.

3. Elektromechanischer Aktuator nach dem vorhergehenden Anspruch, bei dem der Wert des einstellbaren Widerstands ($R_{ajust}$) in Abhängigkeit von der gewünschten Genauigkeit der Messung der Messvorrichtung, von Parametern der elektrischen Energieversorgungsquelle, von Parametern des Analog-Digital-Wandlers und von Parametern der rotierenden elektrischen Maschine (16, 16') bestimmt wird.

4. Elektromechanischer Aktuator nach dem vorhergehenden Anspruch, bei dem die rotierende mehrphasige elektrische Maschine ein mehrphasiger Elektromotor (16) ist.

5. Elektromechanischer Aktuator nach dem vorhergehenden Anspruch, wobei der Wechselrichter eine Vielzahl von Zweigen (B1, B2, B3) aufweist, die zwischen einem ersten Verbindungspunkt (C1) und einem zweiten Verbindungspunkt (C2) elektrisch parallel geschaltet sind, wobei jeder Zweig (B1, B2, B3) einen ersten elektronischen Schalter (K1, K2, K3) aufweist, der mit dem ersten Verbindungspunkt (C1) elektrisch verbunden ist und mit einem zugehörigen zweiten elektronischen Schalter (K4, K5, K6) elektrisch in Reihe geschaltet ist, wobei der zweite elektronische Schalter elektrisch mit dem zweiten Verbindungspunkt (C2) verbunden ist und derart, dass durch das gleichzeitige Schalten eines ersten elektronischen Schalters (K1, K2, K3) und eines zweiten elektronischen Schalters (K4, K5, K6), der nicht sein zugehöriger elektronischer Schalter ist, kann mindestens eine Wicklung (E1, E2, E3) der mehrphasigen elektrischen Drehmaschine gespeist werden, wobei der siebte elektronische Schalter (K7) von einem Steuerungsmodul gesteuert wird, das auch die ersten und zweiten elektronischen Schalter (K1, K2, K3, K4, K5, K6) des Wechselrichters steuert.

6. Elektromechanischer Aktuator nach dem vorhergehenden Anspruch, wobei der siebte elektronische Schalter (K7) und ein zugehöriger erster elektronischer Schalter (K2, K3) so konfiguriert sind, dass sie während eines vorbestimmten Zeitintervalls gemeinsam von einem gesperrten Zustand in einen eingeschalteten Zustand umschalten.

7. Elektromechanischer Aktuator nach einem der Ansprüche 5 oder 6, bei dem die elektrische Energieversorgungsquelle der Messvorrichtung mit einstellbarer Genauigkeit elektrisch an einen Mittelpunkt (V) eines Zweigs (B1, B2, B3) des Wechselrichters angeschlossen ist, der sich von dem Zweig (B1, B2, B3) mit dem der siebte elektronische Schalter (K7) elektrisch verbunden ist, unterscheidet, über einen weiteren elektronischen Schalter (K8), den sogenannten achten Schalter, wobei dieser dazu bestimmt ist, gleichzeitig mit einem zweiten Schalter (K4, K5, K6) der Messvorrichtung mit einstellbarer Genauigkeit zu schalten.

8. Elektromechanischer Stellantrieb nach einem der Ansprüche 2 bis 7, wobei die elektronische Steuereinheit (15) ein Steuermodul umfasst, das so konfiguriert ist, dass es vor jedem Startversuch der rotierenden Maschine (16, 16') die interne Motortemperatur testet und den Start der rotierenden Maschine (16, 16') nur dann zulässt, wenn die interne Temperatur der mehrphasigen rotierenden elektrischen Maschine (16, 16') unter einem vorbestimmten Schwellenwert liegt.

9. Heimautomatisierungsvorrichtung, **dadurch gekennzeichnet, dass** sie einen Aktuator nach einem der Ansprüche 2 bis 8 umfasst.

10. Motorisierungsanordnung für einen Verschluss- oder Sonnenschutzschirm, **dadurch gekennzeichnet, dass** sie einen elektromechanischen Aktuator nach einem der Ansprüche 2 bis 8 umfasst.

11. Verfahren zur Schätzung der Innentemperatur einer mehrphasigen rotierenden elektrischen Maschine (16, 16'), die eine Vielzahl von Eingangsanschlüssen (160) und eine Vielzahl von Wicklungen (E1, E2, E3) umfasst, wobei jeder Eingangsanschluss der rotierenden Maschine elektrisch mit einem Ausgangsanschluss einer elektronischen Steuereinheit nach Anspruch 1 verbunden ist, wobei die elektronische Steuereinheit (15) außerdem eine Messvorrichtung mit einstellbarer Genauigkeit umfasst, die Folgendes umfasst:

- eine Stromversorgungsquelle (V_bus, Vdd), die so konfiguriert ist, dass sie ein kontinuierliches Stromversorgungssignal liefert, wobei das Stromversorgungssignal während eines vorbestimmten Zeitintervalls geliefert wird,

- einen Einstellwiderstand ($R_{(ajust)}$), der so konfiguriert ist, dass er die Genauigkeit der Messung der Messvorrichtung festlegt,
- einen Sensor ($R_{mesure}$), der so konfiguriert ist, dass er ein Signal ausgibt, das proportional zu dem Strom ist, der von der Messvorrichtung aufgenommen wird, wenn mindestens zwei der Ausgangsanschlüsse 150) der elektronischen Steuereinheit (15) elektrisch mit Eingangsanschlüssen (160) der mehrphasigen rotierenden elektrischen Maschine (16, 16') verbunden sind,

die elektrische Energieversorgungsquelle (V_bus, Vdd), der Einstellwiderstand ($R_{(ajust)}$) und der Sensor ($R_{mesure}$) elektrisch in Reihe geschaltet und zwischen zwei der Ausgangsanschlüsse (150) der elektronischen Steuereinheit (15) angeordnet sind, wobei die Messvorrichtung mit einstellbarer Genauigkeit außerdem einen elektronischen Schalter (K7), den sogenannten siebten Schalter, umfasst, der so konfiguriert ist, dass er die Ausgabe des Stromversorgungssignals der elektrischen Energiequelle (V_bus, Vdd) der Messvorrichtung mit einstellbarer Genauigkeit der elektronischen Steuereinheit zeitlich begrenzt,
wobei das Verfahren **dadurch gekennzeichnet ist, dass** es Folgendes umfasst:

- einen Schritt (Etp1) zum Aufbau einer Gleichspannung zwischen zwei Ausgangsanschlüssen (150) der elektronischen Steuereinheit (15) während eines vorbestimmten Zeitintervalls mit Hilfe der elektrischen Energieversorgungsquelle (V_bus, Vdd), wobei der Rotor während dieses Schritts nicht in Drehung versetzt wird, wobei die Messung der Innentemperatur des Motors durchgeführt wird, wenn der Motor stillsteht,
- einen Schritt (Etp2) zur Lieferung eines Signals durch den Sensor ($R_{mesure}$), das repräsentativ für einen Strom ist, der von der Messvorrichtung während des vorbestimmten Zeitintervalls absorbiert wurde,
- einen Schritt (Etp3) zum Schätzen der Innentemperatur der rotierenden elektrischen Maschine (16, 16') anhand des von dem Sensor ($R_{mesure}$) gelieferten Signals, wobei der Wert der Genauigkeit der Schätzung durch den Wert des Anpassungswiderstands ($R_{ajust}$) definiert ist.

12. Verfahren nach dem vorhergehenden Anspruch, wobei der Schritt (Etp3) zum Schätzen der Innentemperatur umfasst :

- einen Unterschritt (Etp31) zum Schätzen der Amplitude eines Stroms, der in der Messvorrichtung mit einstellbarer Genauigkeit fließt, mithilfe des Signals, das von dem Sensor ($R_{mesure}$) geliefert wird,
- einen Unterschritt (Etp32) zum Schätzen des Werts des Widerstands ($R_{enroul}$) von mindestens einer Wicklung (E1, E2, E3) der rotierenden Maschine (16, 16') anhand des Werts des geschätzten Stroms,
- einen Unterschritt (Etp33) zum Schätzen der Innentemperatur der rotierenden elektrischen Maschine (16, 16') mithilfe des Werts des Widerstands ($R_{enroul}$) von mindestens einer Wicklung (E1, E2, E3).

**Claims**

1. Electronic control unit (15) configured to control a polyphase rotating electrical machine (16, 16'), the electronic control unit (15) comprising a plurality of output terminals (150), each output terminal (150) being configured to be electrically connected to an input terminal (160) of the polyphase rotating electrical machine (16, 16'), the electronic control unit being **characterized in that** it comprises an adjustable-accuracy measuring device having :

- an electrical power supply (V_bus, Vdd) configured to deliver a continuous power signal, the power signal being delivered for a predetermined time interval,
- an adjustment resistor ($R_{ajust}$) configured to set the measurement accuracy of the measurement device ,
- a sensor ($R_{measure}$) configured to deliver a signal proportional to the current drawn by the measurement device when at least two of the output terminals (150) of the electronic control unit (15) are electrically connected to input terminals (160) of the polyphase rotating electrical machine (16, 16'),

the power supply (V_bus, Vdd), the adjustment resistor ($R_{ajust}$) and the sensor ($R_{mesure}$) being electrically connected in series and arranged between two of the output terminals (150) of the electronic control unit (15), the precision-adjustable measuring device further comprising an electronic switch (K7), called seventh switch, configured to limit in time the delivery of the supply signal from the electrical power supply source (V_bus, Vdd) of the precision-adjustable measuring device to the electronic control unit.

2. Electromechanical actuator **characterized in that** it comprises an electronic control unit (15) according to claim 1, comprising a polyphase inverter comprising a plurality of output terminals (150) and a polyphase rotating electrical machine (16, 16') comprising a plurality of input terminals (160), each input terminal of the rotating machine being electrically connected to an output terminal of the electronic control unit, the electronic control unit (15) being configured to estimate the internal temperature of the polyphase rotating machine (16, 16') by means of the adjustable-accuracy measuring device.

3. Electromechanical actuator according to the preceding claim in which the value of the adjustable resistor ($R_{ajust}$) is determined as a function of the desired measurement accuracy of the measuring device, of parameters of the electrical power supply source, of parameters of the analog-to-digital converter and of parameters of the rotating electrical machine (16, 16').

4. Electromechanical actuator according to the preceding claim in which the rotating machine electric polyphase is an electric polyphase motor (16).

5. Electromechanical actuator according to the preceding claim, wherein the inverter comprises a plurality of branches (B1, B2, B3) electrically connected in parallel between a first connection point (C1) and a second connection point (C2), each branch (B1, B2, B3) comprising a first electronic switch (K1, K2, K3) electrically connected to the first connection point (C1) and electrically connected in series with an associated second electronic switch (K4, K5, K6), the second electronic switch being electrically connected to the second connection point (C2) and being such that simultaneous switching of a first electronic switch (K1, K2, K3) and a second electronic switch (K4, K5, K6) other than its associated electronic switch enables power to be supplied to at least one winding (E1, E2, E3) of the polyphase electric rotating machine, the seventh electronic switch (K7) being controlled by a control module which also controls the first and second electronic switches (K1, K2, K3, K4, K5, K6) of the inverter.

6. Electromechanical actuator according to the preceding claim, in which the seventh electronic switch (K7) and an associated first electronic switch (K2, K3) are configured to switch together from a blocked state to a conducting state for a predetermined time interval.

7. Electromechanical actuator according to one of claims 5 or 6, in which the electrical power supply source of the adjustable-accuracy measuring device is electrically connected to a midpoint (V) of a branch (B1, B2, B3) of the inverter, different from the branch (B1, B2, B3) to which the seventh electronic switch (K7) is electrically connected, via a further electronic switch (K8), called eighth switch, which is designed to switch simultaneously with a second switch (K4, K5, K6) of the adjustable-precision measuring device.

8. Electromechanical actuator according to one of claims 2 to 7 in which the electronic control unit (15) comprises a control module configured to test the internal temperature of the motor before each attempt to start the rotating machine (16, 16') and to authorize starting of the rotating machine (16, 16') only if the internal temperature of the polyphase rotating electrical machine (16, 16') is below a predetermined threshold value.

9. Home automation device **characterized in that** it comprises an actuator according to one of the claims 2 to 8.

10. Motorization assembly for a closure or sun protection screen, **characterized in that** it comprises an electromechanical actuator according to one of the claims 2 to 8.

11. Method for estimating the internal temperature of a multiphase rotating electrical machine (16, 16') comprising a plurality of input terminals (160) and a plurality of windings (E1, E2, E3), each input terminal of the rotating machine being connected electrically to an output terminal of an electronic control unit according to claim 1, the electronic control unit (15) further comprising a measuring device with adjustable accuracy comprising :

    - a power supply (V_bus, Vdd) configured to deliver a continuous power signal, the power signal being delivered for a predetermined time interval,
    - an adjustment resistor ($R_{ajust}$) configured to set the measurement accuracy of the measuring device,
    - a sensor ($R_{measure}$) configured to deliver a signal proportional to the current absorbed by the measurement device when at least two of the output terminals (150) of the electronic control unit (15) are electrically connected to input terminals (160) of the multiphase rotating electrical machine (16, 16'),

        the electrical power supply (V_bus, Vdd), the adjustment resistor ($R_{ajust}$) and the sensor ($R_{mesure}$) being electrically connected in series and arranged between two of the output terminals (150) of the electronic control unit (15), the precision-adjustable measuring device further comprising an electronic switch (K7), called seventh switch, configured to limit in time the delivery of the supply signal from the electrical power supply source (V_bus, Vdd) of the precision-adjustable measuring device to the electronic control unit, the process being **characterized in that** it comprises:

- a step (Etp1) of establishing a continuous voltage between two output terminals (150) of the electronic control unit (15) for a predetermined time interval by means of the electrical power supply (V_bus, Vdd), the rotor not being driven in rotation during this step, the measurement of the motor's internal temperature being carried out when the motor is at a standstill,
- a step (Etp2) in which the sensor ($R_{measure}$) supplies a signal representative of a current absorbed by the measurement device during the predetermined time interval,
- a step (Etp3) of estimating the internal temperature of the rotating electrical machine (16, 16') from the signal supplied by the sensor ($R_{mesure}$), the value of the accuracy of the estimate being defined by the value of the adjustment resistor ($R_{ajust}$).

12. Method according to the preceding claim in which the step (Etp3) of estimating the internal temperature comprises :

- a sub-step (Etp31) for estimating the amplitude of a current flowing in the precision-adjustable measuring device using the signal supplied by the sensor (Rmeasure),
- a sub-step (Etp32) for estimating the resistance value ($R_{enroul}$) of at least one winding (E1, E2, E3) of the rotating machine (16, 16') from the estimated current value,
- a sub-step (Etp33) for estimating the internal temperature of the rotating electrical machine (16, 16') using the resistance value ($R_{enroul}$) of at least one winding (E1, E2, E3).

Figure 1

Figure 2

Figure 3

Figure 4

Figure 5

Figure 6

Figure 7

Figure 8

**EP 3 729 638 B1**

## RÉFÉRENCES CITÉES DANS LA DESCRIPTION

**Documents brevets cités dans la description**

- EP 1677411 A1
- US 2010156338 A1
- EP 2743713 A1